# EUROPÄISCHE PATENTSCHRIFT

(11) **EP 2 686 194 B1**
(45) Veröffentlichungstag und Bekanntmachung des Hinweises auf die Patenterteilung: **10.05.2017**
(21) Anmeldenummer: 12723364.1
(22) Anmeldetag: 16.03.2012
(51) Int. Cl.: B60L 5/00, B60M 7/00, B61B 13/00, B60L 11/18, H01F 21/04, H01F 21/06, H01F 38/14, H02J 7/02

(54) **EINRICHTUNG ZUR INDUKTIVEN ENERGIEÜBERTRAGUNG**
DEVICE FOR INDUCTIVE ENERGY TRANSFER
DISPOSITIF DE TRANSFERT D'ÉNERGIE PAR INDUCTION

(30) Priorität: 18.03.2011 DE 102011014521
(43) Veröffentlichungstag der Anmeldung: 22.01.2014
(73) Patentinhaber: Ingenieurbüro Duschl, 15848 Tauche-Giesensdorf (DE)
(72) Erfinder: DUSCHL-GRAW, Georg, 10629 Berlin (DE)
(74) Vertreter: adares Patent- und Rechtsanwälte Reininger & Partner
(86) Internationale Anmeldenummer: PCT/DE2012/100068
(87) Internationale Veröffentlichungsnummer: WO 2012/126465

(56) Entgegenhaltungen:
- DE-A1- 3 304 719
- DE-A1-102009 021 797
- DE-B1- 2 434 890

## Beschreibung

Die Erfindung betrifft eine Einrichtung zur induktiven Energieübertragung, bei der eine Fahrbahn ein dreiphasiges Primärsystem und ein auf der Fahrbahn abrollendes oder ruhendes Objekt ein mit dem Primärsystem induktiv koppelbares dreiphasiges Sekundärsystem umfasst.

Einrichtungen zur Übertragung elektrischer Energie nach dem Transformatorprinzip haben die Aufgabe, Energie mithilfe von Wechselspannungen zu übertragen. Das erfolgt mithilfe eines magnetischen Kreises, um den Leiter zweier verschiedener Stromkreise gewickelt sind. Legt man an einer Transformatorprimärspule eine Wechselspannung an, so stellt sich an der Sekundärspule ebenfalls eine Wechselspannung ein. Das Verhältnis der Spannungen ist proportional zum Verhältnis der Windungszahlen der Primär- und der Sekundärspule.

Aus der DE 4 236 340 C2 ist eine induktive Energieübertragungsanordnung bekannt, bei der die Energie über einen Luftspalt hinweg berührungsfrei übertragen wird. In diesem Fall ist es erforderlich, die Luftspaltgröße konstant zu halten und die Fahrbahn von Verunreinigungen frei zu halten.

Gemäß der WO 2010/057799 A1 wird eine berührungsbehaftete induktive Energieübertragung vorgeschlagen. Die elektrische Energie wird über ein Rad übertragen, das auf einer an eine Stromquelle angeschlossenen Fahrbahn oder Schiene abrollt. Zur Vermeidung eines Luftspaltes ist das Rad mit einem magnetisch leitenden Elastomer umgeben.

Aus der DE 33 04 719 A1 ist eine auf dem Transformatorprinzip basierende Dreiphasen-Kraftübertragungsanlage bekannt, bei der erste Wicklungen um ein erstes Magnetkernteilstück und zweite Wicklungen um ein zweites Magnetkernteilstück gewickelt sind und das erste und das zweite Magnetkernteilstück relativ zueinander bewegbar sind. Bei dieser - magnetisch unsymmetrischen - Transformatorbauart zur mobilen Energieübertragung ist aufgrund der unterschiedlichen Positionen des mobilen Sekundärsystems eine aufwändige Anordnung und Bestromung von Hilfswicklungen erforderlich, um zu verhindern, dass bei Belastung Teile des Eisenkreises in die Sättigung geraten und dadurch der Wirkungsgrad verschlechtert wird. Zudem ist die Anwendung unsymmetrischer Transformatoren bei der mobilen Energieübertragung mit einer erheblichen Geräuschentwicklung verbunden.

Der Erfindung liegt die Aufgabe zugrunde, eine Einrichtung zur dreiphasigen Übertragung elektrischer Energie zwischen einer Fahrbahn und einem auf dieser bewegten oder ruhenden Objekt anzugeben, die einfach ausgebildet ist und einen hohen Wirkungsgrad aufweist.

Erfindungsgemäß wird die Aufgabe mit einer gemäß den Merkmalen des Patentanspruchs 1 oder des Patentanspruchs 6 ausgebildeten Einrichtung gelöst.

Vorteilhafte Weiterbildungen der Erfindung sind Gegenstand der Unteransprüche.

Bei einer Einrichtung zur induktiven Energieübertragung zwischen einem dreiphasigen stationären Primärsystem und einem mobilen dreiphasigen Sekundärsystem besteht der Grundgedanke der Erfindung in der magnetisch symmetrischen Bauform mit unabhängig von der jeweiligen Position des mobilen Sekundärsystems gleichlangen Magnetflusswegen durch die Primärwicklungen und die Sekundärwicklungen der drei Phasen und entsprechend annähernd konstanter Leistungsübertragung. Gemäß der Erfindung sind die ferromagnetischen stationären und mobilen Eisenkernteile als gleichseitiges Dreieck oder als ein gleichseitiges Dreieck aufspannender Stern mit gleich langen und in gleichem Winkel zueinander verlaufenden Schenkeln und von deren Enden ausgehenden Stützpfosten sowie in gleichem Abstand zueinander angeordneten Primär- oder Sekundärwicklungen ausgebildet. Das heißt, die Primär- und Sekundärwicklungen befinden sich in den gedachten Eckpunkten eines gleichseitigen Dreiecks. Zur Energieübertragung in der Bewegung des abrollbaren Objekts sind primärseitig zwei im Abstand hintereinander angeordnete stationäre Eisenkernteile an den jeweiligen Stützpfosten über parallel verlaufende, in ein und derselben Ebene liegende ferromagnetische Fahrbahnschienen (Magnetschienen) verbunden, auf denen das mobile Eisenkernteil mithilfe von in Ausnehmungen der mobilen Stützpfosten untergebrachten ferromagnetischen Laufrollen abrollbar oder an unterschiedlichen Stellen positionierbar ist.

Aufgrund der symmetrischen Bauform des hier für die dreiphasige mobile Energieübertragung vorgeschlagenen Transformators sind die Wege des Magnetflusses im geblechten Eisenkern durch die Primärwicklungen und die Sekundärwicklungen für alle drei Phasen gleich, so dass in jeder Position des mobilen Sekundärsystems symmetrische Magnetflüsse und somit - und zwar auch im Zusammenwirken mit der durch die ferromagnetischen Laufrollen bewirkten Luftspaltminimierung - ein hoher Wirkungsgrad der Energieübertragung erreicht werden und Streuflüsse minimiert werden. Das heißt, unabhängig von der Position des Sekundärsystems auf den Magnetschienen ist aufgrund der magnetisch symmetrischen Bauform bei symmetrischer Belastung eine symmetrische Magnetflussverteilung in den Jochen des Sekundärsystems und eine relativ konstante und zudem geräuscharme Leistungsübertragung gewährleistet.

In Ausgestaltung der Erfindung bilden zwei im Abstand angeordnete, mit Primärwicklungen versehene und parallel geschaltete stationäre Eisenkernteile in Verbindung mit den Magnetschienen ein an eine Spannungsquelle anschließbares Fahrbahnsegment. Es können zwei oder mehrere Fahrbahnsegmente magnetisch voneinander isoliert hintereinander angeordnet sein.

In Ausgestaltung der Erfindung sind die Primärwicklungen und die Sekundärwicklungen an den Stützpfosten oder an den Schenkeln der sternförmigen Eisenkernteile in gleichem Abstand von deren Mittelpunkt oder mittig an den Schenkeln der dreieckförmigen Eisenkernteile angeordnet.

In weiterer Ausgestaltung der Erfindung sind die Magnetschienen in eine Fahrbahn eingebunden und die stationären Eisenkernteile und Primärwicklungen sind unterflur angeordnet.

In vorteilhafter Weiterbildung der Erfindung sind die Magnetschienen oder die Laufrollen mit einem ferromagnetischen festen, aber elastischen Material beschichtet, um den Luftspalt zwischen dem Primärsystem und dem Sekundärsystem noch weiter zu verringern. Zudem werden dadurch die Abrolleigenschaften verbessert.

Gemäß einem noch anderen Merkmal der Erfindung kann für eine induktive Energieübertragung in einem ausschließlich ruhenden Zustand des abrollbaren Objekts auf die Zwischenschaltung der Magnetschienen und Laufrollen verzichtet werden. In diesem Fall wird das in einem beweglichen Objekt angeordnete, jedoch ohne Laufrollen ausgebildete mobile Eisenkernteil mit seinen Stützpfosten unmittelbar auf die Stützpfosten eines in eine Fahrbahn oder Parkfläche integrierten stationären Eisenkernteils abgesenkt. Das stationäre und mobile Eisenkernteil sind wieder als gleichseitiges Dreieck oder als ein gleichseitiges Dreieck aufspannender Stern mit gleich langen und in gleichem Winkel zueinander verlaufenden Schenkeln und von deren Enden ausgehenden Stützpfosten sowie in gleichem Abstand zueinander angeordneten Primär- oder Sekundärwicklungen ausgebildet.

Das abrollbare Objekt ist ein ganz oder teilweise über Akkumulatoren elektrisch angetriebenes Fahrzeug, in dem das horizontal und vertikal verstellbare mobile Eisenkernteil auf die Magnetschienen bzw. unmittelbar auf das stationäre Eisenkernteil absenkbar angeordnet ist, um die Akkumulatoren in einem bewegten oder ruhenden Zustand des Fahrzeugs nachzuladen, wobei die Primärwicklungen des Fahrbahnsegments nur im Kontakt mit dem mobilen Eisenkernteil bestromt sind.

In weiterer Ausbildung der Erfindung sind Mittel zur Einspeisung eines Signals in das Sekundärsystem und Mittel zur Erkennung dieses Signals im Primärsystem vorgesehen, wobei das Signal im Primärsystem nur erkennbar ist, wenn zwischen Primär- und Sekundärsystem ein geschlossener magnetischer Kreis besteht.

Es ist bei entsprechender konstruktiver Anpassung selbstverständlich auch denkbar, anstelle der dreiphasigen Energieübertragungseinrichtung eine nach dem vorliegenden Erfindungsprinzip mit mehr als drei Phasen ausgebildete mehrphasigen Einrichtung einzusetzen.

Ein Ausführungsbeispiel der Erfindung wird anhand der Zeichnung näher erläutert. Es zeigen:
- Fig. 1: eine schematische Darstellung einer Einrichtung zur dreiphasigen induktiven Energieübertragung zwischen einem als Primärsystem ausgebildeten Fahrbahnsegment und einem auf diesem abrollbaren, an einem Fahrzeug gehaltenen Sekundärsystem;
- Fig. 2: eine perspektivische Ansicht eines Sekundärsystems aus einem als gleichseitiges Dreieck ausgebildeten mobilen, nur für die Energieübertragung im Ruhezustand vorgesehenen Eisenkernteil; und
- Fig. 3: eine vergrößerte schematische Schnittansicht eines Stützpfostens des Sekundärsystems mit integrierten Laufrollen.

Das ein Primärsystem eines dreiphasigen Transformators darstellende Fahrbahnsegment 1 besteht aus drei parallel und in einer Ebene angeordneten Magnetschienen 2 und einem mit diesem verbundenen ersten und zweiten ferromagnetischen, einstückig aus drei Schenkeln 3a, 3b und 3c gebildeten - ersten und zweiten - stationären Eisenkernteil 3. Die Schenkel 3a, 3b, 3c haben jeweils die gleiche Länge und gehen sternförmig und symmetrisch von einem gemeinsamen Mittelpunkt Z1, Z3 aus, wobei jeweils zwei im Winkel zueinander angeordnete - benachbarte - Schenkel jeweils ein identisches gleichschenkliges Dreieck bilden. Die Endpunkte der Schenkel 3a, 3b, 3c entsprechen den Eckpunkten eines gleichseitigen Dreiecks. Ein vom Ende jedes Schenkels abstrebender Stützpfosten 3a', 3b', 3c' ist jeweils an die Unterseite einer der drei Magnetschienen 2 angeschlossen und trägt jeweils eine mit einer Spannungsquelle (nicht dargestellt) verbundene Primärwicklung 4. Die Primärwicklungen 4 sind somit an einem sternförmigen stationären Eisenkernteil 3, das heißt geometrisch in den Eckpunkten eines gleichseitigen Dreiecks angeordnet. Während die Magnetschienen 2 im Wesentlichen bündig in eine Fahrbahnoberfläche eingelassen werden, sind die beiden im Abstand zueinander positionierten ferromagnetischen Eisenkernteile 3 des Fahrbahnsegments 1 unterflur angeordnet. Die beiden im Abstand voneinander mit den Magnetschienen 2 verbundenen stationären Eisenkernteile 3 sind elektrisch parallel geschaltet. Dadurch ist der magnetische Fluss in den Sekundärschenkeln weitgehend unabhängig von der Position des Sekundärsystems auf den Magnetschienen. Es kann eine Mehrzahl von magnetisch voneinander isolierten Fahrbahnsegmenten 1 hintereinander in eine Fahrbahn integriert sein, um so ein langgestrecktes stationäres Primärsystem zur Energieübertragung auf ein auf einer Fahrbahn bewegliches, mit einem mobilen Sekundärsystem des dreiphasigen Rolltransformators ausgerüstetes Objekt zu schaffen.

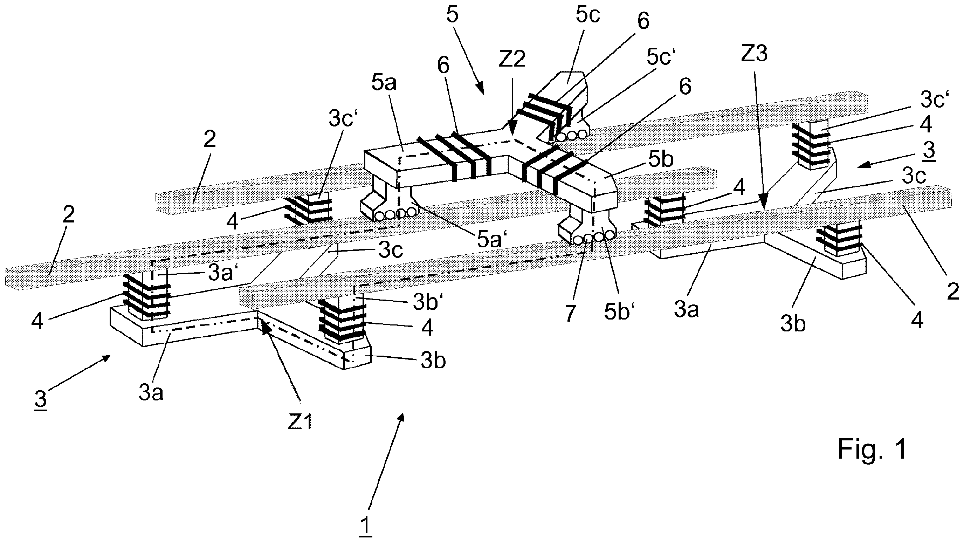

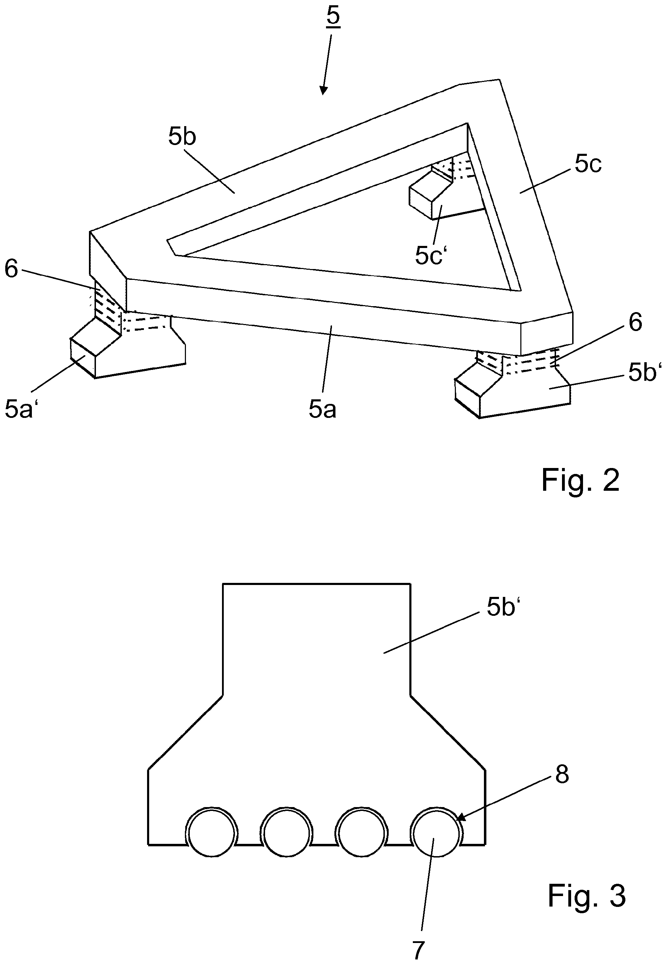

Das für die Energieübertragung in der Bewegung eines abrollbaren Objekts vorgesehene mobile Sekundärsystem umfasst, wie Fig. 1 zeigt, ein mobiles ferromagnetisches Eisenkernteil 5 mit drei sternförmig zueinander ausgerichteten, gleich langen und von einem Mittelpunkt Z2 jeweils in gleichem Winkel zueinander ausgehenden Schenkeln 5a, 5b, 5c und von deren Enden in Richtung der Fahrbahnschienen 2 abstrebenden Stützpfosten 5a', 5b' und 5c'. Die Endpunkte der Schenkel 5a, 5b, 5c entsprechen den Eckpunkten eines gleichseitigen Dreiecks. In gleichmäßigem Abstand vom Mittelpunkt Z3 des mobilen Eisenkernteils 5 sind an den Schenkeln 5a, 5b, 5c jeweils eine an einen Verbraucher in dem abrollbaren Objekt (nicht dargestellt) angeschlossene Sekundärwicklung 6 angebracht. Die Mobilität des Sekundärsystems auf den Magnetschienen 2 ist durch in den Stützpfosten 5a', 5b', 5c' ausgebildete zylinderförmige Laufrollen 7 gewährleistet, die - wie die mobilen Schenkel und Stützpfosten - aus ferromagnetischem Material bestehen und an der freien, zu den Magnetschienen 2 gerichteten Seite der Pfosten in zylindrische, einen schmalen Spalt freilassende Ausnehmungen 8 eingebunden sind. Die ferromagnetischen Laufrollen 7, von denen, wie Fig. 3 zeigt, nur ein schmaler Zylinderabschnitt aus der Grundfläche der Stützpfosten 5a', 5b', 5c' herausragt, sind somit immanenter Bestandteil des Eisenkernteils 5, so dass nur ein sehr geringer Luftspalt zwischen dem mobilen Eisenkernteil 5 und den Magnetschienen 2 des stationären Eisenkernteils 3 vorhanden ist und die durch den Luftspalt bedingten Energieübertragungsverluste somit gering sind. Zur Verringerung der Luftspaltverluste ist es auch denkbar, die Fahrbahnschienen mit einem elastischen, magnetisch leitfähigen Belag (nicht dargestellt), beispielsweise einem ferromagnetischen Elastomer, zu beschichten.

Wie anhand der strich-punktierten Linie in Fig. 1 beispielhaft dargestellt, sind bei der zuvor beschriebenen Bauform eines Dreiphasentransformators alle möglichen Magnetflusswege - hier beispielsweise von Z1 nach Z2 (bzw. von Z3 nach Z2) - gleich lang. Das heißt, die magnetischen Widerstände in den drei magnetischen Teilkreisen von Z1 nach Z2 bzw. von Z3 nach Z2 sind jeweils gleich, so dass sich bei symmetrischer elektrischer Belastung jeweils annähernd gleich große Magnetflüsse im Sekundärkreis ergeben. Bei der hier vorgeschlagenen magnetisch symmetrischen Bauform zur dreiphasigen induktiven Energieübertragung ist in jeder Position des mobilen Eisenkernteils 5 zum stationären Eisenkernteil 3 ein gleich großer magnetischer Fluss vorhanden, so dass bei symmetrischer Belastung keine den Wirkungsgrad verringernde unsymmetrische Sättigung in Teilen des Transformators auftreten kann und mithin ein hoher Wirkungsgrad der elektrischen Energieübertragung zwischen dem stationären Primärsystem und dem mobilen Sekundärsystem gewährleistet ist. Darüber hinaus entfällt die bei der aus dem Stand der Technik bekannten Transformatorbauform mit unsymmetrischen magnetischen Eigenschaften erforderliche aufwändige Anordnung von entsprechend bestromten Hilfswicklungen. Zudem zeichnet sich die hier vorgeschlagene magnetisch symmetrische dreiphasige Transformatorbauform durch eine gegenüber der bekannten unsymmetrischen Bauform deutlich verringerte Geräuschbildung aus.

Die symmetrische Bauform des Energieübertragungssystems ist gleichermaßen auch dann gewährleistet, wenn, wie in Fig. 2 am Beispiel eines dreieckförmigen mobilen Eisenkernteils 9 dargestellt, die Schenkel 9a, 9b, 9c des mobilen Eisenkernteils 9 (und/oder eines der stationären Eisenkernteile) in Form eines gleichseitigen Dreiecks mit von den Eckpunkten der aneinanderstoßenden Schenkel in Richtung der ferromagnetischen Magnetschienen 2 ausgehenden Stützpfosten 9a', 9b', 9c' ausgebildet sind. In diesem Beispiel sind die Sekundärwicklungen an den mit Laufrollen 7 ausgebildeten Stützpfosten 9a', 9b', 9c' angeordnet. Die Primär- bzw. Sekundärwicklungen können aber auch an den Schenkeln angeordnet sein. Prinzipiell können in derselben Energieübertragungseinrichtung stern- oder dreieckförmig ausgebildete Eisenkernteile miteinander kombiniert sein.

Die zuvor beschriebene Einrichtung zur induktiven Energieübertragung wird beispielsweise zum Nachladen der Batterien von mit einem Elektro- oder Hybridantrieb versehenen Fahrzeugen verwendet. Das Primärsystem ist in eine Parkfläche oder eine Fahrbahn eingelassen, wobei eine Mehrzahl der oben beschriebenen Fahrbahnsegmente magnetisch voneinander isoliert aneinandergereiht werden können, um auch bei einer längeren Wegstrecke und jeweiliger Bestromung des Primärsystems eine Energieübertragung vornehmen zu können. Das Sekundärsystem ist absenkbar unter dem zu versorgenden Fahrzeug angebracht und kann auf die in die Fahrbahn oder Parkfläche eingelassenen ferromagnetischen Magnetschienen des Primärsystems abgesenkt werden, sobald sich das Fahrzeug entlang den Fahrbahnsegmenten bewegt oder über einem Fahrbahnsegment zum Stillstand kommt. Es wird nur das jeweilige Fahrbahnsegment bestromt, über dem sich das Fahrzeug im Stillstand oder in der Bewegung gerade befindet.

Das in Fig. 2 dargestellte mobile Eisenkernteil 5 weist an den Stützpfosten 5a', 5b', 5c' entgegen der Darstellung in Fig. 1 keine Laufrollen auf, da es im Ruhezustand unmittelbar auf die Stützpfosten eines in einer Fahrbahn oder Parkfläche (einzeln und ohne Magnetschienen) angeordneten stationären Eisenkernteils aufgesetzt wird.

Die Energieeinspeisung in das jeweilige Fahrbahnsegment erfolgt aufgrund eines in das Sekundärsystem eingegebenen Signals, das im Primärsystem nur erkannt wird, wenn ein geschlossener magnetischer Kreis zwischen dem stationären und dem mobilen Eisenkernteil besteht. Durch die vom Sekundärsystem in das Primärsystem übertragenen Signale wird sichergestellt, dass nur diejenigen Wicklungen des Primärsystems bestromt werden, deren stationäre Eisenkernteile 3 gerade mit dem mobilen Eisenkernteil 5 einen geschlossenen Magnetkreis bilden. Die gezielte Bestromung der Primärspulen verhindert zusammen mit dem geschlossenen magnetischen Eisenkreis die Bildung von Streufeldern mit für den Menschen unzulässig hohen Induktionen.

### Bezugszeichenliste

- 1: Fahrbahnsegment
- 2: Magnetschiene
- 3: stationäres, stern- oder dreieckförmiges Eisenkernteil
- 3a, 3b, 3c: stationäre Schenkel
- 3a', 3b', 3c': stationäre Stützpfosten
- 4: Primärwicklung
- 5: mobiles, stern- oder dreieckförmiges Eisenkernteil
- 5a, 5b, 5c: mobile Schenkel
- 5a', 5b', 5c': mobile Stützpfosten
- 6: Sekundärwicklung
- 7: ferromagnetische Laufrollen
- 8: Ausnehmung
- Z1, Z2, Z3: Mittelpunkt von 3 bzw. 5

## Patentansprüche

1. Einrichtung zur induktiven Energieübertragung, bei der eine Fahrbahn ein dreiphasiges Primärsystem aus an einem stationären ferromagnetischen Eisenkernteil (3) angebrachten Primärwicklungen (4) und ein auf der Fahrbahn abrollendes oder ruhendes Objekt ein mit dem Primärsystem induktiv koppelbares dreiphasiges Sekundärsystem aus an einem mobilen ferromagnetischen Eisenkernteil (5) angebrachten Sekundärwicklungen (6) umfasst, **gekennzeichnet durch** eine magnetisch symmetrische Bauform mit gleichlangen Wegen des Magnetflusses **durch** die Primärwicklungen (4) und die Sekundärwicklungen (6) der drei Phasen und entsprechend annähernd konstanter Leistungsübertragung in der Bewegung, bei der das stationäre und das mobile Eisenkernteil (3, 5) als gleichseitiges Dreieck oder als ein gleichseitiges Dreieck aufspannender Stern mit gleich langen und in gleichem Winkel zueinander verlaufenden Schenkeln (3a, 3b, 3c; 5a, 5b, 5c) und von deren Ende ausgehenden Stützpfosten (3a', 3b', 3c'; 5a', 5b', 5c') sowie in gleichem Abstand zueinander angeordneten Primär-oder Sekundärwicklungen (4, 6) ausgebildet sind, wobei im Abstand hintereinander angeordnete, elektrisch parallel geschaltete stationäre Eisenkernteile (3) an den jeweiligen Stützpfosten (3a', 3b', 3c') über parallel verlaufende Magnetschienen (2) verbunden sind, auf denen das mobile Eisenkernteil (5) mithilfe von in Ausnehmungen (8) der mobilen Stützpfosten (5a', 5b', 5c') untergebrachten ferromagnetischen Laufrollen (7) abrollbar oder positionierbar ist.

2. Einrichtung nach Anspruch 1, **dadurch gekennzeichnet, dass** zwei mit Primärwicklungen (4) versehene und elektrisch parallel geschaltete stationäre Eisenkernteile (3) in Verbindung mit den Magnetschienen (2) ein an eine Spannungsquelle anschließbares Fahrbahnsegment (1) bilden.

3. Einrichtung nach Anspruch 2, **dadurch gekennzeichnet, dass** zwei oder mehrere Fahrbahnsegmente (1) magnetisch voneinander isoliert hintereinander angeordnet sind.

4. Einrichtung nach Anspruch 1, **dadurch gekennzeichnet, dass** die Magnetschienen (2) in eine Fahrbahn eingebunden sind und die stationären Eisenkernteile (3) und Primärwicklungen (4) unterflur angeordnet sind.

5. Einrichtung nach Anspruch 1, **dadurch gekennzeichnet, dass** die Magnetschienen (2) oder die Laufrollen (7) mit einem ferromagnetischen festen, aber elastischen Material beschichtet sind.

6. Einrichtung zur induktiven Energieübertragung, bei der eine Fahrbahn ein dreiphasiges Primärsystem aus an einem stationären ferromagnetischen Eisenkernteil (3) angebrachten Primärwicklungen (4) und ein auf der Fahrbahn abrollbares, aber ruhendes Objekt ein mit dem Primärsystem induktiv koppelbares dreiphasiges Sekundärsystem aus an einem mobilen ferromagnetischen Eisenkernteil (5) angebrachten Sekundärwicklungen (6) umfasst, **gekennzeichnet durch** eine magnetisch symmetrische Bauform mit gleichlangen Wegen des Magnetflusses **durch** die Primärwicklungen (4) und die Sekundärwicklungen (6) der drei Phasen und entsprechend annähernd konstanter Leistungsübertragung, bei der das stationäre und das mobile Eisenkernteil (3, 5) als gleichseitiges Dreieck oder als ein gleichseitiges Dreieck aufspannender Stern mit gleich langen und in gleichem Winkel zueinander verlaufenden Schenkeln (3a, 3b, 3c; 5a, 5b, 5c) und von deren Ende ausgehenden Stützpfosten (3a', 3b', 3c'; 5a', 5b', 5c') sowie in gleichem Abstand zueinander angeordneten Primär- oder Sekundärwicklungen (4, 6) ausgebildet sind.

7. Einrichtung nach Anspruch 1 oder 6, **dadurch gekennzeichnet, dass** die Primärwicklungen (4) und die Sekundärwicklungen (6) an den Stützpfosten (3a', 3b', 3c'; 5a', 5b', 5c') oder an den Schenkeln der sternförmigen Eisenkernteile in gleichem Abstand von deren Mittelpunkt (ZI, Z2, Z3) oder mittig an den Schenkeln der dreieckförmigen Eisenkernteile (3, 5) angeordnet sind.

8. Einrichtung nach Anspruch 1 oder 6, **dadurch gekennzeichnet, dass** das abrollbare Objekt ein ganz oder teilweise über Akkumulatoren elektrisch angetriebenes Fahrzeug ist, in dem das horizontal und vertikal verstellbare mobile Eisenkernteil (5) mit den Laufrollen (7) auf die Magnetschienen (2) oder unmittelbar auf das stationäre Eisenkernteil (3) absenkbar angeordnet ist, um die Akkumulatoren in einem bewegten oder ruhenden Zustand des Fahrzeugs nachzuladen, wobei die Primärwicklungen (4) des Fahrbahnsegments (1) nur im Kontakt mit dem mobilen Eisenkernteil (5) bestromt sind.

9. Einrichtung nach Anspruch 8, **dadurch gekennzeichnet, dass** Mittel zur Einspeisung eines Signals in das Sekundärsystem und Mittel zur Erkennung dieses Signals im Primärsystem vorgesehen sind, wobei das Signal im Primärsystem nur erkennbar ist, wenn zwischen Primär- und Sekundärsystem ein geschlossener magnetischer Kreis besteht.

## Claims

1. A device for inductive energy transfer, in which a track comprises a three-phrase primary system made up of primary windings (4) which are mounted on a stationary ferromagnetic iron core part (3), and an object which rolls or is stationary on the track comprises a three-phase secondary system which can be inductively coupled to the primary system and is made up of secondary windings (6) which are mounted on a mobile ferromagnetic iron core part (5), **characterized by** a magnetically symmetrical design with magnetic flux paths of equal length through the primary windings (4) and the secondary windings (6) of the three phases and correspondingly approximately constant power transfer during the movement, in which the stationary and the mobile iron core parts (3, 5) are designed as an equilateral triangle or a star which spans an equilateral triangle and has limbs (3a, 3b, 3c; 5a, 5b, 5c) of equal length which run at the same angle in relation to one another and supporting posts (3a', 3b', 3c'; 5a', 5b', 5c') which extend from the ends thereof and also primary or secondary windings (4, 6) which are arranged at the same distance from one another, wherein stationary iron core parts (3) which are arranged at a distance one behind the other and are connected electrically in parallel are connected at the respective supporting posts (3a', 3b', 3c') by means of parallel magnetic rails (2) onto which the mobile iron core part (5) can roll or can be positioned with the aid of ferromagnetic running rollers (7) which are accommodated in recesses (8) of the mobile supporting posts (5a', 5b', 5c').

2. The device as claimed in claim 1, **characterized in that** two stationary iron core parts (3) which are provided with primary windings (4) and are connected electrically in parallel form in connection with the magnetic rails (2) a track segment (1) which is connectable to a voltage source.

3. The device as claimed in claim 2, **characterized in that** two or more track segments (1) are arranged one behind the other such that they are magnetically isolated from one another.

4. The device as claimed in claim 1, **characterized in that** the magnetic rails (2) are incorporated in a track, and the stationary iron core parts (3) and primary windings (4) are arranged underground.

5. The device as claimed in claim 1, **characterized in that** the magnetic rails (2) or the running rollers (7) are coated with a ferromagnetic, strong yet elastic, material.

6. A device for inductive energy transfer, in which a track comprises a three-phase primary system made up of primary windings (4) which are mounted on a stationary ferromagnetic iron core part (3), and an object which can roll on the track yet is stationary comprises a three-phase secondary system which can be inductively coupled to the primary system and is made up of secondary windings (6) which are mounted on a mobile ferromagnetic iron core part (5), **characterized by** a magnetically symmetrical design with magnetic flux paths of equal length through the primary windings (4) and the secondary windings (6) of the three phases and correspondingly approximately constant power transfer, in which the stationary and the mobile iron core parts (3, 5) are designed as an equilateral triangle or a star which spans an equilateral triangle and has limbs (3a, 3b, 3c; 5a, 5b, 5c) of equal length which run at the same angle in relation to one another and supporting posts (3a', 3b', 3c'; 5a', 5b', 5c') which extend from the ends thereof and also primary or secondary windings (4, 6) which are arranged at the same distance from one another.

7. The device as claimed in claim 1 or 6, **characterized in that** the primary windings (4) and the secondary windings (6) are arranged on the supporting posts (3a', 3b', 3c'; 5a', 5b', 5c') or on the limbs of the star-shaped iron core parts at the same distance from the center points (Z1, Z2, Z3) thereof or centrally on the limbs of the triangular iron core parts (3, 5).

8. The device as claimed in claim 1 or 6, **characterized in that** the object which can roll is a vehicle which is entirely or partly electrically driven by means of rechargeable batteries, in which the horizontally and vertically adjustable mobile iron core part (5) having the running rollers (7) is arranged such that it can be lowered onto the magnetic rails (2) or directly onto the stationary iron core part (3) in order to recharge the rechargeable batteries in a moving or stationary state of the vehicle, wherein the primary windings (4) of the track segment (1) are supplied with current only when they are in contact with the mobile iron core part (5).

9. The device as claimed in claim 8, **characterized in that** means for feeding a signal to the secondary system and means for identifying this signal in the primary system are provided, wherein the signal in the primary system can be identified only when there is a closed magnetic circuit between the primary system and secondary system.

## Revendications

1. Un dispositif pour le transfert d'énergie par induction, dans lequel une voie comprend un système primaire triphasé d'enroulements (4) primaires reliés à une part (3) de noyau de fer ferromagnétique fixe et un objet déroulant ou reposant sur la voie comprend un système secondaire triphasé qui peut être couplé par induction au système primaire et qui a des enroulements (6) secondaires reliés à une part (5) de noyau de fer ferromagnétique mobile, **caractérisé par** une conception magnétique symétrique ayant des chemins du flux magnétique avec la même longueur par les enroulements (4) primaires et les enroulements (6) secondaires des trois phases et par conséquent un transfert de puissance à peu près constant pendant le mouvement, dans lequel les parts (3,5) de noyau de fer fixe et mobile sont conçues comme un triangle équilatéral ou un étoile définissant un triangle équilatéral ayant des branches (3a, 3b, 3c; 5a, 5b, 5c) qui ont la même longueur et s'étendent au même angle l'une par rapport à l'autre et des montants de support (3a', 3b', 3c'; 5a', 5b', 5c') qui se prolongent depuis l'extrémité de celles-ci et des enroulements (4, 6) primaire et secondaire équidistants ente eux, dans lequel des parts (3) de noyau de fer qui sont disposés l'une derrière l'autre à distance et connectées électriquement en parallèle et fixes sont connectées aux montants (3a', 3b', 3c') de support respectifs via des barres magnétiques parallèles (2), sur lesquelles la part (5) de noyau de fer mobile peut être déroulée ou positionnée à l'aide de roulettes (7) ferromagnétiques logées dans des cavités (8) des montants (5a', 5b', 5c') de support mobiles.

2. Le dispositif selon la revendication 1, **caractérisé en ce que** deux parts (3) de noyau de fer stationnaires et prévues avec des enroulements (4) primaires et connectées électriquement en parallèle forment en combinaison avec les barres (2) magnétiques un segment (1) de voie qui peut être raccordé à une source de tension.

3. Le dispositif selon la revendication 2, **caractérisé en ce que** deux ou plusieurs segments (1) de voie sont disposés l'un derrière l'autre de façon isolée magnétiquement l'un de l'autre.

4. Le dispositif selon la revendication 1, **caractérisé en ce que** les barres magnétiques (2) sont intégrées dans une voie et les parts (3) de noyau de fer fixes et les enroulements (4) primaires sont disposés enfoui.

5. Le dispositif selon la revendication 1, **caractérisé en ce que** les barres magnétiques (2) ou les roulettes (7) sont recouvertes par un matériau ferromagnétique solide mais élastique.

6. Un dispositif pour le transfert d'énergie par induction, dans lequel une voie comprend un système primaire triphasé d'enroulements (4) primaires reliés à une part (3) de noyau de fer ferromagnétique fixe et un objet qui peut être déroulé mais est reposé sur la voie comprend un système secondaire triphasé qui peut être couplé par induction avec le système primaire et qui a des enroulements (6) secondaires reliés à une part (5) de noyau de fer ferromagnétique mobile, **caractérisé par** une conception magnétique symétrique ayant des chemins du flux magnétique avec la même longueur par les enroulements (4) primaires et les enroulements (6) secondaires des trois phases et par conséquent un transfert de puissance à peu près constant, dans lequel les parts (3,5) de noyau de fer fixe et mobile sont conçues comme un triangle équilatéral ou un étoile définissant un triangle équilatéral ayant des branches (3a, 3b, 3c; 5a, 5b, 5c) qui ont la même longueur et s'étendent au même angle l'une par rapport à l'autre et des montants (3a', 3b', 3c'; 5a', 5b', 5c') de support qui se prolongent depuis l'extrémité de celles-ci et des enroulements (4, 6) primaires et secondaires équidistants ente eux.

7. Le dispositif selon la revendication 1 ou 6, caractérisé en que les enroulements (4) primaires et les enroulements (6) secondaires sont disposés aux montants (3a', 3b', 3c'; 5a', 5b', 5c') de support ou aux branches des parts de noyau de fer sous forme d'étoile à même distance du point (Z1, Z2, Z3) central de celles-ci ou centrés aux branches des parts (3, 5) de noyau de fer sous forme de triangle.

8. Le dispositif selon la revendication 1 ou 6, caractérisé en que l'objet qui peut être déroulé est un véhicule qui est actionné électriquement complètement ou partiellement par des accumulateurs, dans lequel la part (5) de noyau de fer mobile et ajustable horizontalement et verticalement avec les roulettes (7) est disposée de manière abaissable aux barres magnétiques (2) ou directement à la part (3) de noyau de fer pour recharger les accumulateurs pendant un état mouvementé ou immobile du véhicule, dans lequel les enroulements (4) primaires du segment (1) de voie sont alimentés en courant seulement en contact avec la part (5) de noyau de fer mobile.

9. Le dispositif selon la revendication 8, caractérisé en que des moyens pour injecter un signal dans le système secondaire et des moyens pour détecter ce signal dans le système primaire sont prévus, dans lequel le signal peut être détecté seulement dans le système primaire, si un circuit magnétique fermé consiste entre le système primaire et secondaire.
